# NEUE EUROPÄISCHE PATENTSCHRIFT

(11) **EP 3 323 541 B3**
(45) Veröffentlichungstag dieser Patentschrift: **30.04.2025**
(45) Hinweis auf die Patenterteilung: 19.06.2019
(21) Anmeldenummer: 16199874.5
(22) Anmeldetag: 21.11.2016
(51) Int. Cl.: B23C 5/12, B23C 5/08

(54) **VERBESSERTER LOGARITHMISCHER FRÄSKOPF**
IMPROVED LOGARITHMIC MILLING HEAD
TÊTE DE FRAISAGE LOGARITHMIQUE AMÉLIORÉE

(43) Veröffentlichungstag der Anmeldung: 23.05.2018
(73) Patentinhaber: Gloor Präzisionswerkzeuge AG, 2543 Lengnau (CH)
(72) Erfinder: Lusti, Hanspeter, 2543 Lengnau (CH); Flury, Daniel, 4514 Lommiswil (CH)
(74) Vertreter: BOVARD AG

(56) Entgegenhaltungen:
- WO-A1-03/053617
- FR-A- 678 321

## Beschreibung

### Technisches Gebiet der Erfindung

Die Erfindung betrifft einen Formfräskopf mit einer Mehrzahl von spanend arbeitenden Fräszähnen und dazwischen angeordneten Zahnlücken, welche entlang einer Umfangsfläche des Formfräskopfes angeordnet sind.

### Stand der Technik

Bei der materialabtragenden Bearbeitung von Werkstücken ist das Fräsen ein klassisches Standardverfahren. Es kommt bei der Bearbeitung von unterschiedlichsten Materialien, wie beispielsweise Holz, Kunststoff und Metall, zum Einsatz. Dabei werden üblicherweise schnell rotierende Fräsköpfe verwendet, an denen entweder das Werkstück vorbei bewegt wird (stationärer Fräskopf), oder welche an einem starr eingespannten Werkstück vorbei bewegt werden. Die Geschwindigkeit der Relativbewegung von Fräskopf als "Gesamtbauteil" und Werkstück ist dabei vergleichsweise klein, insbesondere wenn Metalle bearbeitet werden. Typisch sind bei Metallen Geschwindigkeiten im Bereich von Millimetern pro Minute (mm/min) bis hin zu Metern pro Minute (m/min). Die Drehzahl des Fräskopfes ist demgegenüber deutlich höher und liegt oftmals im Bereich von 1.000 U/min (bei grösseren Fräsköpfen mit beispielsweise 80 mm Durchmesser) bis hin zur 10.000 U/min (bei kleineren Fräsköpfen mit beispielsweise 10 mm Durchmesser) und gegebenenfalls noch höher.

Ein Vorteil des Fräsens liegt insbesondere darin, dass der Fräskopf mit einer geformten abtragenden Oberfläche (Formgebung des Fräszahns) gestaltet werden kann. Dadurch kann das zu bearbeitende Werkstück beim Bearbeitungsvorgang mit einer bestimmten, gewünschten Oberflächengestaltung versehen werden.

Es ist jedoch nach wie vor das sogenannte Formfräsen üblich, bei dem eine mit einer speziellen Formgebung zu versehende, durch Materialabtrag auszubildende Oberfläche mit einem nicht-strukturierten Fräskopf bearbeitet wird, und die Formgebung durch eine geeignete zweidimensionale Verfahrbewegung des Fräskopfs relativ zum zu bearbeitenden Werkstück realisiert wird.

Naturgemäss ist es erwünscht, möglichst hohe Bearbeitungsgeschwindigkeiten (Relativbewegung zwischen Fräskopf und Werkstück und damit bearbeitete Kantenlänge pro Zeiteinheit) zu realisieren. Grundsätzlich besteht dabei das Problem, dass je schneller der Vorschub erfolgt (bei gleichbleibender Drehgeschwindigkeit des Fräskopfes), umso höher die Neigung zur Gratbildung ist und umso mehr Oberflächenrauigkeiten entstehen. Ab einer gewissen Verfahrgeschwindigkeit kommt es auch zu einer mechanischen Überbelastung der Fräse, gegebenenfalls auch zu einem Festfressen der Fräse, was typischerweise auch Beschädigungen des Fräskopfes und/oder des Werkstücks zur Folge hat.

Auch einer Erhöhung der Drehzahl sind naturgemäss Grenzen gesetzt, insbesondere hinsichtlich der Belastbarkeit der verwendeten Materialien. Dementsprechend ist stets ein Kompromiss zwischen möglichst schneller Werkstückfertigung und ausreichend hoher Oberflächengüte zu finden.

Naturgemäss trachtet man danach, die Bearbeitungsgeschwindigkeit trotz gleichbleibender Werkstückoberflächengüte zu erhöhen.

Dieser Wunsch ist insbesondere unter der Rahmenbedingung einer möglichst hohen Werkzeugstandzeit (also Standzeit des Fräskopfes) zu realisieren.

Das Dokument WO 03/053617 offenbart ein Werkzeug zum Herstellen eines Gelenkinnenteils für ein Gleichlaufdrehgelenk mit Hilfe des Scheibenformfräsens, wobei das Werkzeug einen scheibenförmigen Fräskörper mit auf der Umfangsfläche angebrachten Fräszähnen umfasst. Der Quotient aus der Zahl der Fräszähne und dem Durchmesser des Fräskörpers ist beim offenbarten Werkzeug grösser als 0.25 Zähne/mm.

### Offenbarung der Erfindung

Dementsprechend hat die Erfindung zur Aufgabe, einen Formfräskopf mit einer Mehrzahl von spanend arbeitenden Fräszähnen und dazwischen angeordneten Zahnlücken, welche entlang einer Umfangsfläche des Formfräskopfes angeordnet sind, dahingehend zu verbessern, dass dieser gegenüber derartigen, im Stand der Technik bekannten Formfräsköpfen, verbesserte Eigenschaften aufweist.

Die Erfindung gemäss Anspruch 1 löst diese Aufgabe.

Es wird vorgeschlagen, einen Formfräskopf mit einer Mehrzahl von spanend arbeitenden Fräszähnen und dazwischen angeordneten Zahnlücken, welche entlang einer Umfangsfläche des Formfräskopfes angeordnet sind, derart auszubilden, dass der Formfräskopf eine profilkonstant bzw. logarithmisch hinterschliffene Oberfläche aufweist, und dass die Anzahl der Fräszähne grösser und/oder im Wesentlichen gleich der Anzahl an Fräszähnen ist, die unter Verwendung der Beziehung *y=a·x⁵ +b·x*⁴ *+c·x*³ *+d·x*² *+e·x+ f* ermittelt wird, wobei *x* der Durchmesser des Formfräskopfes in Millimetern und *y* die Zahnteilung, also der Abstand zweier benachbart zueinander liegender Fräszähne in Millimetern ist, und wobei im Wesentlichen gilt, dass der Wert von *a* zwischen *a*=1,95·10⁻⁹ und *a*=2,05·10⁻⁹, der Wert von *b* zwischen *b*=-7,5·10⁻⁷ und *b=*-8,5·10⁻⁷*,* der Wert von *c* zwischen *c*=0,95·10⁻⁴ und *c*=1,05·10⁻⁴, der Wert von *d* zwischen *d=*9,0·10^{*-*3} und *d=9,2.10^{-3,}* der Wert von *e* zwischen *e*=3,1·10⁻¹ und *e*=3,2·10⁻¹, und der Wert von *f* zwischen *f=-*2,0·10⁻¹ und *f*=-2,1·10⁻¹ liegt, wobei das Verhältnis von Fräszahnbreite zu Breite der dazwischenliegenden Zahnlücke im Bereich von 0,95 bis 1,05 liegt und wobei die Höhe der Fräszähne im Bereich von 0,05 bis 10 mm liegt.

Für die Anzahl der Fräszähne kann das "grösser", als auch das "im Wesentlichen gleich" in Alleinstellung gelten. Darüber hinaus kann auch die Kombination, also ein "grösser oder im Wesentlichen gleich" bzw. ein "grösser oder gleich" gelten. Hier könnte man auch von einem "grösser gleich" oder dergleichen sprechen. Für die Zahnteilung gilt entsprechend "kleiner", "im Wesentlichen gleich", "kleiner oder im Wesentlichen gleich", "kleiner oder gleich" bzw. "kleiner gleich" oder dergleichen. Auch könnte man diese Beziehungen in Form einer Formel, insbesondere als *y*≤*a*·*x⁵+b*·*x*⁴*+c*·x*³+d*·*x²+e*·*x+f* bzw. als *y<a*·*x⁵+b·x⁴ +c·x*³ *+d·x²+e*·*x+f* formulieren. "Benachbart zueinander liegende Fräszähne" bezieht sich dabei auf Fräszähne, die längs der Umfangsrichtung des Fräskopfes benachbart zueinander, also gewissermassen "hintereinander" liegen. Dabei bemisst sich der Abstand auf jeweils gleichartige Bereiche der benachbart zueinander liegenden Fräszähnen, also beispielsweise den Abstand der jeweiligen Zahnbrust der benachbart zueinander liegenden Fräszähne (vorliegend jeweils in Millimetern gemessen). Die Erfindung betrifft also einen Formfräskopf. Unter einem Formfräskopf wird ein Fräskopf verstanden, der beim zu bearbeitenden Werkstück keine ebene Oberfläche fertigt (oder gegebenenfalls auch eine gekrümmte Oberfläche mit einem konstanten Krümmungsgrad), sondern der eine (gegebenenfalls auch mehrfach) gebogene Oberfläche aufweist und diese auf das zu bearbeitende Werkstück überträgt. Insbesondere können sich bei der Oberfläche Vorsprünge und Rücksprünge abwechseln; können eckige Kanten, abgerundete Kanten mit gegebenenfalls variierenden Krümmungsradien, Kehlungen, stegartige Vorsprünge usw. vorgesehen und unterschiedliche Dimensionierungen realisiert werden. Den denkbaren Möglichkeiten sind dabei kaum Grenzen gesetzt.

Zudem handelt es sich um einen sogenannten logarithmischen bzw. profilkonstant hinterschliffenen Formfräskopf. Unter profilkonstant hinterschliffenen bzw. logarithmischen Fräsköpfen versteht man typischerweise Fräsköpfe, bei denen bei einem Nachschleifen und/oder Hinterschleifen der Fräszähne der Zahnbrustwinkel und/oder der Freiwinkel der Fräszähne (im Wesentlichen) konstant bleibt. Es werden hier also keine Fräszähne verwendet, die einen konstanten Aussendurchmesser aufweisen. Vielmehr verjüngt sich dieser in Umfangsrichtung (gesehen entgegen der Drehrichtung des Fräskopfes) mit fortschreitenden Abstand von der Fräszahnschneidkante. Da diese Änderung des Durchmessers meist auf einer logarithmischen Beziehung beruht, werden derartige Fräsköpfe oftmals als logarithmische Fräsköpfe bzw. logarithmisch hinterschliffene Fräsköpfe bezeichnet. Derartige Fräsköpfe sind grundsätzlich im Stand der Technik bekannt und erfreuen sich zunehmender Verbreitung. Zwar sind derartige Fräsköpfe aufwendiger in der Fertigung - die Möglichkeit des besonders vorteilhaften Nachschleifens und/oder Hinterschleifens und die sonstigen Eigenschaften des Fräskopfes überkompensieren diesen Nachteil jedoch in aller Regel deutlich.

Ein Vorteil bei derartigen Fräsköpfen ist unter anderem, dass während der Standzeit des Fräskopfs zwar infolge Werkzeugabnutzung häufiger ein Nachschleifvorgang erforderlich ist; ein Hinterschleifvorgang ist aufgrund der besonderen Formgebung dagegen in aller Regel deutlich seltener erforderlich (falls überhaupt). Dies reduziert den Wartungsaufwand erheblich. Insbesondere ist es bei derartigen Fräsköpfen auch nicht erforderlich, den Vorschub pro Zeiteinheit zu verändern, wenn sich der Fräskopf infolge von Abnutzung und/oder aufgrund eines Nachschleifvorgangs und/oder Hinterschleifvorgangs ändert, insbesondere hinsichtlich seines Durchmessers ändert. Denn immerhin bleibt die Fräszahnanzahl und darüber hinaus auch der Zahnbrustwinkel, also der Winkel, mit dem die Fräszähne den aktuell zu bearbeitenden Bereich des zu bearbeitenden Werkstücks bearbeiten, (zumindest im Wesentlichen) konstant, was in einem (im Wesentlichen) identischen Materialabtragverhalten resultiert. Mit anderen Worten kann der Fräskopf über seine gesamte Lebenszeit (Standzeit) hinweg mit im Wesentlichen gleichartigen Parametern betrieben werden, wie insbesondere hinsichtlich Drehzahl, Vorschubgeschwindigkeit relativ zum Werkstück, Oberflächengüte des bearbeiteten Werkstücks und dergleichen. Die damit einhergehenden Vorteile sind offensichtlich.

Die Erfinder haben erkannt, dass der limitierende Vorgang der relative Vorschub zwischen dem Fräskopf und Werkstück pro Abtragungsvorgang ist. Ein Abtragungsvorgang erfolgt dabei in aller Regel durch einen vorspringenden Fräszahn, insbesondere im Bereich der Schneidkante der Zahnbrust des betreffenden Fräszahns. Ein typischer Wert hierfür ist der Vorschub pro Schneidvorgang, also der Vorschub, der jeweils in der Zeit zwischen dem Passieren zweier Fräszähne erfolgt (bei im Wesentlichen konstanter Vorschubgeschwindigkeit). Dieser variiert insbesondere in Abhängigkeit vom Material in vergleichsweise weiten Grenzen. Speziell bei der Metallbearbeitung sind Werte im Bereich von 10 µm bis 30 µm recht typisch (was grundsätzlich bekannt ist). Dementsprechend kann bei gleichbleibendem Radius des Fräskopfes sowie bei gleichbleibender Umdrehungsgeschwindigkeit des Fräskopfes der Vorschub des Fräskopfes pro Zeiteinheit erhöht werden, wenn die Anzahl der Fräszähne erhöht wird. In einem solchen Fall kommt es mit der Zunahme der Fräszähne zu einer Erhöhung der Fräsvorgänge pro Umdrehung des Fräskopfes. Um ein Beispiel zu nehmen: Bei einem Fräskopf mit 50 mm Durchmesser und einem Vorschub pro Schneidvorgang von 0,03 mm beträgt der zulässige Vorschub pro Umdrehung des Fräskopfes bei 12 Zähnen 0,36 mm, bei 48 Zähnen dagegen 1,44 mm. Dementsprechend ist es naheliegend, die Anzahl der Fräszähne nach Möglichkeit zu erhöhen. Das Problem hierbei ist jedoch, dass mit der Erhöhung der Zahnzahl auch nachteilige Effekte einhergehen. So wird ein Nachschleifen und/oder Hinterschleifen des Fräskopfes, der aufgrund der Werkzeugabnutzung in regelmässigen Abständen erforderlich ist, deutlich aufwendiger, da eine grössere Anzahl an Zähnen zu schleifen (nachzuschleifen und/oder zu hinterschleifen) ist. Nachschleifen bezieht sich typischerweise auf ein Schärfen der Schneidkanten, wohingegen sich Hinterschleifen typischerweise auf ein "Wiederherstellen des gewünschten Profilverlaufs" bezieht. Lediglich der Vollständigkeit halber wird darauf hingewiesen, dass ein Nachschleifvorgang in der Regel häufiger als ein Hinterschleifvorgang durchzuführen ist. Hierdurch existiert eine Obergrenze für die Zahnzahl, die nicht oder zumindest nicht praktikabel überschritten werden darf (zumindest war dies die bislang vorherrschende Ansicht).

Das Problem besteht aber nicht nur im zusätzlichen Aufwand, der mit einer grossen Anzahl an Zähnen einhergeht, sondern auch in den verwendeten Werkzeugen. Wird der Fräskopf und/oder die Schleifscheibe sehr klein dimensioniert, so treten insbesondere im Fall eines Fräskopfes mit einem Formprofil (also ein Formfräskopf, der eine gewisse Oberflächengestaltung aufweist, die sich auf das zu bearbeitende Werkstück überträgt) weitere nachteilige Effekte im Rahmen eines Nachschleifvorgangs/Hinterschleifvorgangs auf. So ist es in der Regel erforderlich (zumindest jedoch praktikabel), dass die Schleifscheibe (also das Werkzeug, mit dem der Fräskopf nachgeschliffen/hinterschliffen wird) nicht (nur) quer zu den Zähnen geführt wird (die Rotationsachse der Schleifscheibe steht also senkrecht auf der Drehachse des Fräskopfes), sondern vielmehr der sogenannte Hinterschleifvorgang (ein Teil des sogenannten Hinterschleifvorgangs) derart erfolgt, dass die Drehachse der Schleifscheibe und die Drehachse des Fräskopfes zumindest im Wesentlichen parallel zueinander verlaufen. Der Vorteil hierbei ist, dass in diesem Fall die Schleifscheibe, die zum Nachschleifen und/oder Hinterschleifen des Fräskopfes verwendet werden kann, ebenfalls mit einer Kontur versehen werden kann, sodass ein besonders einfaches und praktikables Nachschleifen und/oder Hinterschleifen, insbesondere von Formfräsköpfen, möglich ist. Als Schleifscheibe kann dabei vorteilhafterweise eine Spitzschleifscheibe verwendet werden. Der Vollständigkeit halber wird darauf hingewiesen, dass sowohl bei einer Führung von Fräskopf und Schleifscheibe quer zueinander, als auch bei einer Führung von Fräskopf und Schleifscheibe mit parallel zueinander verlaufenden Rotationsachsen auch abweichende Winkellagen verwendet werden können. Es können also (speziell im Falle von quer zueinander angeordneter Schleifscheibe und Fräskopf) Winkellagen verwendet werden, bei dem die Drehachse des Fräskopfs (annähernd) in der (verlängert gedachten) Ebene der Schleifscheibe liegt; es ist aber auch ein deutliches Abweichen hiervon denkbar. Auch eine Anordnung, bei der parallel zueinander liegende Schleifscheibe und Fräskopf relativ zueinander gekippt werden (sodass also die Drehachsen von Schleifscheibe und Fräskopf einen Winkel zueinander einschliessen, wobei sich diese in ihrer Verlängerung (annähernd) in einem gewissen Punkt schneiden) ist im Rahmen eines Nachschleifvorgangs/Hinterschleifvorgangs denkbar und oftmals sinnvoll. Auch eine windschiefe Lage von Rotationsachse der Schleifscheibe und Drehachse des Fräskopfs ist in diesem Zusammenhang denkbar. Da die Schleifscheibe nicht zu klein und/oder zu dünn gewählt werden kann bzw. gewählt werden sollte, kommt es zu einem gewissen Mindestabstand der Zähne des Fräskopfs (Mindestwert für die Zahnteilung), der nicht bzw. nicht praktikabel unterschritten werden darf - und damit zu einer dementsprechenden Obergrenze der Zahnzahl des Fräskopf. Hierbei spielt noch herein, dass auch der Durchmesser der Schleifscheibe aufgrund gewisser Kompromissüberlegungen gewählt werden muss. Wird ein besonders kleiner Durchmesser der Schleifscheibe gewählt, so ist einerseits die Abtragungsleistung geringer (was den Zeitaufwand für einen Nachschleifvorgang und/oder Hinterschleifvorgang weiter vergrössert), andererseits verringert sich die Standzeit der Schleifscheibe, sodass diese dementsprechend oft ersetzt werden muss. Eine besonders grosse Dimensionierung der Schleifscheibe würde wiederum zu einem entsprechend grösseren Abstand der Fräszähne zueinander führen, was dementsprechend die mögliche Zahnzahl des Fräskopfes reduzieren würde. Die gegenseitigen Bedingungen sind hochgradig komplex. Dementsprechend wurde hier schon eine Vielzahl an Vorschlägen gemacht, die jedoch nach wie vor nicht optimal sind und meist nur auf groben Abschätzungen, Erfahrungswerten und technischen Meinungen beruhen. Insbesondere im Falle von Fräsköpfen mit eher ungewöhnlichen Durchmessern führt dies dazu, dass nach wie vor ungünstige Zahnzahlen für den Fräskopf verwendet werden.

Die Erfinder haben herausgefunden, dass sich bei einem Formfräskopf, der unter Verwendung der vorliegend vorgeschlagenen Formel und unter Verwendung der vorliegend vorgeschlagenen Koeffizienten ausgebildet wird (also insbesondere Zahnteilung des Fräskopfs gleich, kleiner oder kleiner gleich bzw. Zahnzahl des Fräskopfs gleich, grösser oder grösser gleich als unter Verwendung der Formel unmittelbar angegeben), ein überraschend guter Kompromiss zwischen den unterschiedlichsten Einflussfaktoren realisieren lässt, was zu einem besonders effizienten, wirtschaftlich zu betreibenden, aber auch wirtschaftlich hinsichtlich seiner Anschaffung und seiner Wartung und auch ansonsten (wie beispielsweise hinsichtlich der Bearbeitungsgüte von Werkstücken) vorteilhaften Formfräskopf führt.

Bei einem vorgegebenen Durchmesser des Formfräskopfes in Millimetern ergibt sich bei Verwendung der Formel (sowie den weiteren erforderlichen Berechnungen) typischerweise eine nicht-ganzzahlige Zahnzahl für den Formfräskopf. Hierbei ist es möglich, dass die sich (unmittelbar) ergebende Zahl insbesondere nach unten und/oder nach oben und/oder kaufmännisch gerundet wird. Als Formel kann dies beispielsweise mittels Modulo- oder mittels Floor- bzw. Ceiling-Funktion (insbesondere für eine geeignet modifizierte Formel, aus der sich die Anzahl an Zähnen des Formfräskopfes unmittelbar ergibt) geschrieben werden. Um ein Beispiel zu nehmen: setzt man einen Durchmesser von 53 mm für den Formfräskopf in die "Grundformel mit Grundkoeffizienten" ein, so ergibt sich eine Zahnteilung zwischen 49,7529 und 53,1743. Damit ergibt sich beim gewählten Durchmesser von 53 mm (entspricht einem Umfang von 166,50 mm) eine Zahnzahl für den Formfräskopf von 3 mm (Zahnzahl=Umfang/Zahnteilung, wobei die Einheiten natürlich passend zueinander gewählt werden müssen). Dementsprechend kann der Formfräskopf (genau) 3, aber auch grösser gleich 3, sowie mehr als 3 Zähne (=grösser) aufweisen (gegebenenfalls noch Multiplikation mit einem Faktor, wie oben vorgeschlagen). Oftmals ist es übrigens sinnvoll, den jeweils oberen Wert zu verwenden. Unter einem Durchmesser kann sowohl der Aussendurchmesser (gemessen als maximaler Durchmesser im Bereich der Fräszähne), im Falle von mit variierender Vorsprungslänge variierenden Fräszähnen, insbesondere im Falle sogenannter profilkonstanter bzw. logarithmischer Formfräsköpfe, auch der kleinste Durchmesser im Bereich der Fräszähne, aber auch ein dazwischen liegender Wert, wie insbesondere der Mittelwert zwischen dem maximalen Fräszahndurchmesser und dem minimalen Fräszahndurchmesser (oder ein sonstiger zwischenliegender Wert) verstanden werden.

Ebenso ist es möglich, dass (anstelle der Abmessungen im Bereich der Fräszähne) zur Definition der Durchmesser im Bereich der Zahnlücken verwendet wird (insbesondere auch minimaler Kerndurchmesser, maximaler Kerndurchmesser, oder auch ein dazwischen liegender Wert, wie insbesondere der mittlere Durchmesserwert im Bereich der Zahnlücken bzw. der mittlere Kerndurchmesser). Der Kerndurchmesser stellt gewissermassen den Durchmesser des Fräskopfes "ohne Zähne" (im Zahngrund) dar. Darüber hinaus ist es auch möglich, einen sonstigen Mittelwert zu nehmen, wie insbesondere einen Mittelwert aus maximalem/minimalem/mittlerem Fräszahndurchmesser und maximalem/minimalem/mittlerem Kerndurchmesser des Fräskopfes. Selbstverständlich sind auch sonstige, beliebige und im Stand der Technik bekannte, insbesondere typischerweise verwendete Durchmesserdefinitionen heranziehbar.

Ein grosser Vorteil bei der vorliegend vorgeschlagenen Formel besteht im Übrigen auch darin, dass man nunmehr auch eine Optimierung hinsichtlich des Fräskopfdurchmessers besonders einfach vornehmen kann. So kann man zum Beispiel eine gewisse Anzahl an Zähnen für den Formfräskopf vorgeben (oder aber auch eine gewisse Zahnteilung des Formfräskopfes vorgeben) und kann mithilfe der Formel einen optimalen Durchmesser des Formfräskopfes bestimmen. Dies gilt insbesondere dann (aber nicht notwendigerweise nur dann), wenn man einen Grenzbereich der zulässigen Zahnzahl des Formfräskopfes bzw. der Zahnteilung des Formfräskopfes (gemäss dem vorgeschlagenen Polynom fünften Grades) ermitteln will. Auch eine wechselseitige Beeinflussung ist selbstverständlich denkbar. So ist es natürlich durchaus möglich (und oftmals auch sinnvoll), dass man beispielsweise ausgehend von einem erwünschten Formfräskopfdurchmesser (einer erwünschten Grössenordnung des Formfräskopfdurchmessers) einen optimalen Wert für die Zahnteilung und/oder eine optimale Anzahl an Fräszähnen des Formfräskopfes berechnet. Insbesondere die optimale Anzahl an Fräszähnen ist nun typischerweise ein nicht-ganzzahliger Wert. Nun kann man diesen Wert runden (aufrunden/abrunden/kaufmännisch runden), kommt dadurch zu einer nunmehr ganzzahligen Zahnzahl des Formfräskopfes und kann basierend auf dieser optimierten Zahnzahl des Formfräskopfes einen optimalen Durchmesser des Formfräskopfes bestimmen. Dies hat eine typischerweise nur vergleichsweise geringfügige Änderung des Formfräskopfdurchmessers zur Folge, der typischerweise in der Praxis nicht nachteilig hervortritt. Anstelle des damit (falls überhaupt) einhergehenden minimalen Nachteils treten jedoch deutliche Vorteile hinsichtlich der realisierbaren maximalen Bearbeitungsgeschwindigkeit des Formfräskopfes auf. Dies gilt insbesondere auch unter Berücksichtigung sonstiger "Nebeneffekte", wie - um nur ein Beispiel zu nehmen - einen möglichst vorteilhaft zu wählenden Durchmesser der Schleifscheibe, mit der der Formfräskopf geschliffen (nachgeschliffen/hinterschliffen) werden soll.

Weiterhin wird vorgeschlagen, dass bei dem Formfräskopf die Fräszähne mit im Wesentlichen gleichen Abstand entlang des Umfangs des Formfräskopfes angeordnet sind. Hierdurch können sich die Eigenschaften des Formfräskopfes verbessern, insbesondere hinsichtlich des Werkstückbearbeitungsverhaltens und/oder des Nachschleifverhaltens und/oder des Hinterschleifverhaltens. Das Gleiche kann im Übrigen auch zusätzlich oder alternativ für die Zahnlücken gelten.

Alternativ hierzu wird vorgeschlagen, dass bei dem Formfräskopf die Fräszähne mit zueinander variierendem Abstand entlang des Umfangs des Formfräskopfes angeordnet sind. Hierdurch können sich ebenfalls die Eigenschaften des Formfräskopfes verbessern, insbesondere hinsichtlich einer geringeren Vibrationsneigung und/oder Lärmentwicklung beim Fräsvorgang.

Insbesondere eignet sich der vorliegend vorgeschlagene Formfräskopf zur Bearbeitung von Metallen bzw. von metallischen Werkstücken. Vorzugsweise ist der Formfräskopf aus einem bevorzugt harten und/oder gehärteten, metallischen Werkstoff gefertigt. Hierbei bietet sich insbesondere die Verwendung von Wolframcarbid und/oder Kobalt (insbesondere als Zuschlagstoff) an. Auch die Verwendung von Diamanten zur Erhöhung der Härte des Materials/Erhöhung der Standzeit des Werkzeugs ist denkbar. Hierbei ist insbesondere an PKD (PKD=Polykristalliner Diamant; ein synthetisch hergestellter Schneidstoff, der eine extrem fest zusammengewachsene Masse von willkürlich orientierten Diamantkristallen aufweist) zu denken. Selbstverständlich ist zusätzlich oder alternativ auch die Verwendung von sogenanntem Cubic Boron Nitride (CBN) denkbar. Dies ist ein Schneidstoff aus einer polykristallinen Masse von kubischem Bohrnitrid-Korn, die unter Hochdruck gesintert wird.

Erfindungsgemäss liegt das Verhältnis von Fräszahnbreite zu Breite der dazwischenliegenden Zahnlücke im Bereich von 0,95 bis 1,05. Insbesondere ist es möglich, dass das Verhältnis im Wesentlichen 1 ist (wobei natürlich gewisse Bearbeitungstoleranzen auftreten können). Erste Versuche haben ergeben, dass sich mit einer derartigen Bemassung ein besonders vorteilhafter Formfräskopf realisieren lässt. Jedoch sind grundsätzlich hiervon (gegebenenfalls auch stark) abweichende Werte/Wertebereiche denkbar.

Der Formfräskopf ist ferner derart ausgebildet, dass die Höhe der Fräszähne (also die Profilhöhe) im Bereich von 0,05 bis 10 Millimetern liegt. Zum Teil haben sich auch andere Werte als vorteilhaft erwiesen, wie beispielsweise als Untergrenze 0,06 mm, 0,07 mm, 0,08 mm, 0,09 mm 0,1 mm, 0,2 mm, 0,3 mm, 0,4 mm, 0,5 mm, 0,6 mm, 0,7 mm, 0,8 mm, 0,9 mm, 1 mm, 1,5 mm, 2 mm, 2,5 mm, 3 mm, 3,5 mm, 4 mm, 4,5 mm oder 5 mm und/oder als Obergrenze 6 mm, 7 mm, 8 mm oder 9 mm. Eine derartige Höhe der Fräszähne hat sich in Bezug auf die Werkzeugstandzeit bei möglichst gleichbleibender Qualität und nach wie vor hoher möglicher Fräszahnzahl (geringer Zahnteilung) als besonders vorteilhaft erwiesen. Die Höhe der Fräszähne kann dabei bei nicht-konstanten Zähnen (insbesondere logarithmischen Fräszähnen) als Maximalhöhe, Minimalhöhe oder auch (sonstiger) Zwischenwert (insbesondere Mittelwert zwischen Maximal- und Minimalwert) verstanden werden. Zur Definition des Formfräskopfdurchmessers wird auf das bereits Gesagte verwiesen. Auch in diesem Zusammenhang ist zu erwähnen, dass grundsätzlich hiervon (gegebenenfalls auch stark) abweichende Werte/Wertebereiche denkbar sind.

Weiterhin ist es von Vorteil, wenn der Formfräskopf derart ausgebildet, eingerichtet und dimensioniert ist, dass er mit einer Schleifscheibe mit bis zu 60 Millimeter Durchmesser hinterschliffen werden kann, insbesondere formkonstant hinterschliffen werden kann, wobei die Drehachse des Formfräskopfes und die Drehachse der Schleifscheibe im Wesentlichen parallel zueinander ausgerichtet sind. Auch andere Durchmesser-Obergrenzen sind für die Schleifscheibe denkbar, wie beispielsweise 20 mm, 30 mm, 40 mm, 50 mm, 70 mm, 80 mm, 90 mm oder 100 mm. Mit einer derartigen Dimensionierung ist es insbesondere möglich, einen besonders vorteilhaften Kompromiss aus Zahnzahl (Zahnteilung), Oberflächengüte des bearbeiteten Werkstücks, maximaler Bearbeitungsgeschwindigkeit, hoher Standzeit des Formfräskopfes sowie hoher Standzeit der Schleifscheibe zu realisieren. Grundsätzlich ist es zwar erwünscht, eine möglichst grosse Schleifscheibe zu verwenden; dies ist jedoch aus den unterschiedlichsten Gründen nicht immer möglich. Ein Schleifvorgang mit "zueinander parallelen Drehachsen" (Hinterschleifvorgang) wird in der Regel zusätzlich zu einem Schleifvorgang durchgeführt, bei dem die Ebene der Schleifscheibe parallel zur Fläche der Zahnbrust eines Fräszahns geführt wird (und somit die Drehachse der Schleifscheibe normal zur Fläche der Zahnbrust eines Fräszahns steht (auch wenn die Drehachse den Flächenbereich der Zahnbrust nicht durchdringt, sondern vielmehr ausserhalb daran vorbei führt; dadurch erfolgt ein Abschleifen einer Materialscheibe im Bereich der Zahnbrust). Möglich ist es aber auch, dass ein derartiger "Schleifvorgang mit parallelen Drehachsen" alternativ zu einem "Schleifvorgang mit normal zur Zahnbrust stehenden Drehachse" durchgeführt wird. Denkbar ist es auch, dass in gewissen Fällen auch kein "Schleifvorgang mit parallelen Drehachsen" erfolgt und man sich (zumindest zeitweise) auf einen "Schleifvorgang mit normal zur Zahnbrust stehenden Drehachse" beschränkt. Die bereits vorgebrachten Ausführungen zum Verdrehen/Kippen/Neigen der Drehachsen von Fräskopf und Schleifscheibe gelten analog auch im vorliegenden Zusammenhang. Erneut wird auch in diesem Zusammenhang darauf hingewiesen, dass grundsätzlich hiervon (gegebenenfalls auch stark) abweichende Werte/Wertebereiche denkbar sind.

### Kurzbeschreibung der Zeichnungen

Weitere Einzelheiten der Erfindung und insbesondere beispielhafte Ausführungsformen der vorgeschlagenen Vorrichtung und des vorgeschlagenen Verfahrens werden im Folgenden anhand der beigefügten Zeichnungen erläutert. Es zeigen:
Fig. 1 einen Formfräskopf 1 in schematischer, perspektivischer Ansicht;
Fig. 2 eine Ausschnittsvergrösserung des in Fig. 1 gezeigten Formfräskopfes in schematischer, perspektivischer Ansicht;
Fig. 3 ein schematischer Querschnitt durch den Zahnbereich eines Formfräskopfes senkrecht zur Materialbearbeitungsrichtung des Formfräskopfes;
Fig. 4 eine schematische Seitenansicht des Zahnbereichs eines Formfräskopfes während eines Hinterschleifvorgangs;
Fig. 5 eine Ausschnittsvergrösserung des Zahnbereichs eines logarithmischen Formfräskopfes in schematischer seitlicher Draufsicht zur Erläuterung unterschiedlicher Begriffe.

### Detailbeschreibung der Ausführungsformen der Erfindung

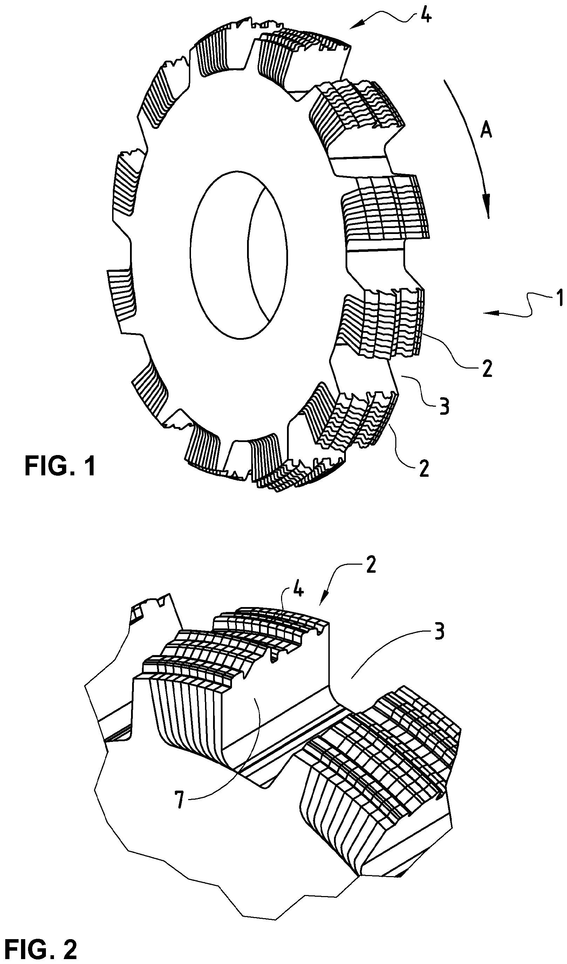

In Fig. 1 ist in einer schematischen, perspektivischen Ansicht ein Formfräskopf 1 zu erkennen. Der Formfräskopf 1 dient der abtragenden Bearbeitung eines zu bearbeitenden Werkstücks (nicht dargestellt) durch Fräsen. Dabei werden in an sich bekannter Weise Oberflächenbereiche des Werkstücks abgespant. Hierzu wird der Formfräskopf 1 in Pfeilrichtung A (Fräsrichtung bzw. Materialbearbeitungsrichtung) gedreht.

Der Formfräskopf 1 weist eine grössere Anzahl von vorliegend asymmetrisch ausgebildeten Fräszähnen 2 auf. Diese sind derart geformt, dass sich ein sogenannter logarithmischer Formfräskopf bildet, worauf im Folgenden noch näher eingegangen wird.

Zwischen jeweils zwei benachbart zueinander liegenden Fräszähnen 2 ist jeweils eine Zahnlücke 3 vorgesehen.

Der Begriff Formfräskopf 1 (bzw. Formfräszahn 2) rührt daher, dass die dem Werkstück zugewandte Oberfläche 4 der Fräszähne 2 eine Strukturierung aufweist. Dadurch ist es möglich, dass das zu bearbeitende Werkstück aufgrund der Fräsbearbeitung mit einer gewissen Oberflächenstrukturierung ausgebildet wird. Die Verhältnisse sind insbesondere auch in Fig. 2 zu erkennen, die einen Detailausschnitt des in Fig. 1 gezeigten Formfräskopfes 1 in ebenfalls perspektivischer, schematischer Ansicht zeigt.

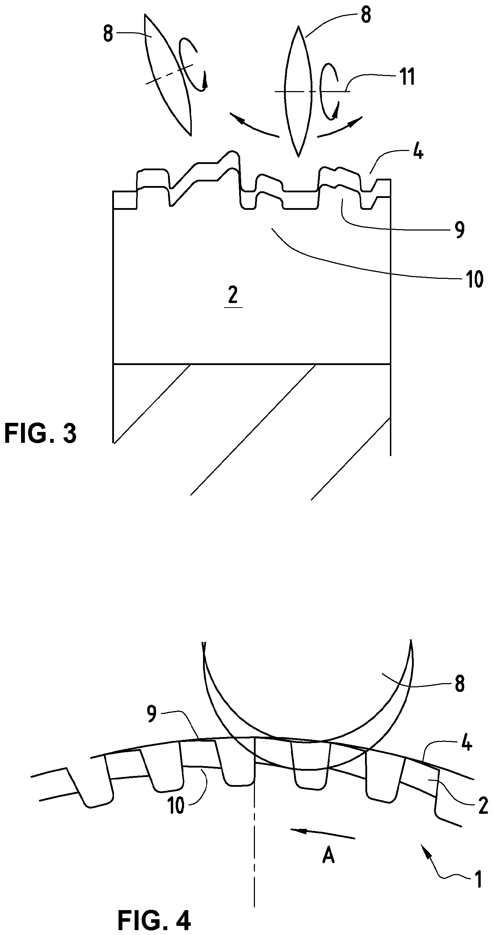

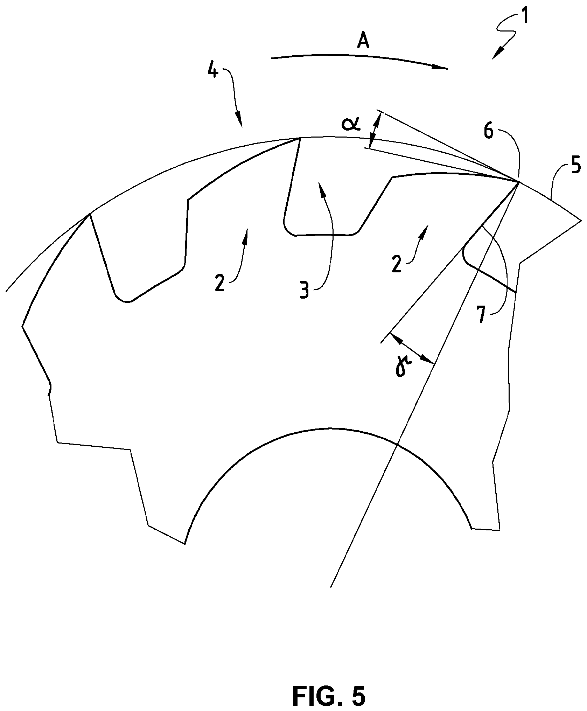

In Fig. 5 sind zusätzlich die Verhältnisse eines Detailausschnitts eines Formfräskopfes 1 in seitlicher schematischer Draufsicht dargestellt. Die Linie 5 stellt dabei eine Kreisumfangslinie um den Mittelpunkt des Formfräskopfes 1 dar. Dadurch ist in Fig. 4 gut zu erkennen, dass die Fräszähne 2 nicht symmetrisch aufgebaut sind. Vielmehr weisen diese eine Vorderseite mit einem Schneidkantenbereich 6 auf, wobei die Schneidkante 6 den Übergang zwischen Oberfläche 4 des Fräszahns 2 und dessen Zahnbrust 7 (Vorderseite) bei Rotation des Formfräskopfes 1 in Pfeilrichtung A (Bearbeitungsrichtung) bildet. Bei einem Bearbeitungsvorgang würde die Tangentiale zur Kreisumfangslinie 5 (an der Schneidkante 6) der Oberfläche des zu bearbeitenden Werkstücks entsprechen. Dementsprechend bildet der Winkel zwischen Zahnbrust 7 und Kreisumfangslinie 5 an der Schneidkante 6 den Zahnbrustwinkel *γ* bei der Werkstückbearbeitung.

In Bearbeitungsrichtung hinten (in Fig. 5 nach links gesehen) verjüngt sich der Fräszahn 2, sodass zwischen Oberfläche 4 des Fräszahns 2 und Kreisumfangslinie 5 ein zunehmender Abstand entsteht. Der Winkel zwischen der Tangentialen zur Kreisumfangslinie 5 sowie der Tangentialen zur Oberfläche 4 an der Schneidkante 6 bildet den sogenannten Freiwinkel *α*. Vorliegend ist die Oberfläche 4 der Fräszähne 2 plan ausgebildet; die Oberfläche 4 der Fräszähne 2 bildet somit also eine Art "schiefer Ebene". Denkbar ist es aber auch, dass die Oberfläche 4 der Fräszähne 2 nicht plan ausgebildet ist und beispielsweise als geneigt angeordnete, leicht konvexe Oberfläche ausgebildet ist ("beulenartig").

Wird der Formfräskopf 1 zur Materialbearbeitung genutzt, so unterliegt dieser naturgemäss einem gewissen Verschleiss, welcher sich im Bereich der Schneidkante 6 konzentriert. Dementsprechend wird hier auch in einem gewissen Ausmass ein Materialabtrag des Formfräskopfes 1, also insbesondere des Fräszahns 2, auftreten. Dadurch verformt sich die Schneidkante 6 mit der Zeit von einer scharfen Kante (mit definierter "echter Kante") zu einer "abgerundeten" (und damit stumpfen) Kante. Mithin wird der Formfräskopf 1 mit der Zeit stumpf. Dadurch lässt dessen Schneidleistung nach. Darüber hinaus weist auch die vom Formfräskopf 1 bearbeitete Oberfläche eine verschlechterte Qualität auf.

Um die Güte des Fräsvorgangs wiederherzustellen, ist es demnach erforderlich den Formfräskopf 1 nachzuschleifen, damit wieder eine scharfe Schneidkante 6 (mit "echter Kante") der Fräszähne 2 gegeben ist. Dies erfolgt durch einen sogenannten Nachschleifvorgang, also einen Schleifvorgang im Bereich der Vorderseite des Fräszahns 2 (in Fräsrichtung A gesehen). Dabei wird ein Teil der Zahnbrust 7 (eine Art "Scheibe") abgetragen. Hierzu wird in der Regel eine Schleifscheibe, insbesondere eine Spitzschleifscheibe 8, verwendet. In Fig. 2 ist schematisch angedeutet, wie der Formfräskopf 1 im Laufe seines Lebenszyklus mehrfach stufenweise ("scheibenweise") im Bereich der Zahnbrust 7 abgeschliffen werden kann.

Je nach Abnutzungsgrad des Formfräskopfes 1 kann es sich auch als erforderlich erweisen, einen kombinierten Nachschleifvorgang und Hinterschleifvorgang durchzuführen. Typischerweise ist ein derartiger kombinierter Nachschleif- und Hinterschleifvorgang nach mehreren "reinen Nachschleifvorgängen" vonnöten. Der kombinierte Nachschleifvorgang/Hinterschleifvorgang erfolgt typischerweise in zwei Schritten. Dabei wird einerseits (typischerweise als erster Schritt) der oben beschriebene Nachschleifvorgang durchgeführt, also die Vorderseite des Fräszahns 2 (in Fräsrichtung A gesehen) abgeschliffen.

Dieser stufenartige (scheibenartige) Materialabtrag im Bereich der Zahnbrust 7 "in Alleinstellung" kann sich jedoch, speziell bei Formfräsköpfen, nach einem längeren Gebrauch als nicht mehr ausreichend erweisen. In einem solchen Fall ist es zusätzlich erforderlich, dass auch die Oberflächenstrukturierung der Oberfläche 4 der Fräszähne 2 durch einen Schleifvorgang "erneuert" wird. Hierzu hat es sich speziell bei Formfräsköpfen 1 bewährt, dass in einem zweiten Schleifschritt (dem Hinterschleifschritt) eine sogenannte Spitzschleifscheibe 8 zum Hinterschleifen der Oberflächen 4 der Fräszähne 2 genutzt wird. Dies ist schematisch in Fig. 3 dargestellt. Hier ist ein Fräszahn 2 im Querschnitt zu erkennen (Querschnitt steht normal zur Bewegungsrichtung des Fräszahns 2 beim Fräsbetrieb des Formfräskopfes 1; also der Materialbearbeitungsrichtung). An der Oberfläche 4 des Fräszahns 2 (dem zu bearbeitenden Werkstück zugewandt) ist die Oberflächenstrukturierung desselben in Form einer Anzahl unterschiedlich ausgebildeter Stege 9 und Furchen 10 zu erkennen. Der Hinterschleifvorgang erfolgt mit einer Spitzschleifscheibe 8, deren vorstehende Kante eine ausreichend kleine Breite aufweist, sodass die Oberflächenstrukturierung der Oberfläche 4 des Fräszahns 2 ausgebildet werden kann. Zur Durchführung des Hinterschleifvorgangs muss die Spitzschleifscheibe 8 mit einem geeigneten Verfahrmuster seitlich hin und her sowie in der Höhe nach oben und unten bewegt werden. Darüber hinaus ist es in der Regel auch sinnvoll, wenn die Drehachse 11 der Spitzschleifscheibe 8 im Verhältnis zur Rotationsachse des Formfräskopfes 1 geneigt wird. Insbesondere die Kantenbereiche der Furchen 10 sind durch ein derartiges Kippen/Neigen der Spitzschleifscheibe 8 relativ zum Formfräskopf 1 in der Regel besser auszubilden.

Der Hinterschleifvorgang ist zusätzlich zu Fig. 3 auch in Fig. 4, hier in schematischer Draufsicht von der Seite aus gesehen, dargestellt. Zur Verdeutlichung des Vorgangs sind darüber hinaus zwei unterschiedliche Formlinen/- Formpunkte des Formfräskopfes 1 dargestellt, nämlich ein Steg 9 sowie eine Furche 10. Die radial äussere Linie stellt einen Steg 9 entlang der Form des Formfräskopfs 1 dar, während die radial innenliegende Linie eine Furche 10 entlang des Form des Formfräskopfes 1 zeigt. Um anzudeuten, dass der Hinterschleifvorgang sowohl im Bereich eines Stegs 9, als auch im Bereich einer Furche 10 des Formfräskopfes 1 "funktioniert", ist auch die Spitzschleifscheibe 8 doppelt (also in unterschiedlichen Positionen) eingezeichnet.

Die einzelnen Nachschleifzyklen und/oder Hinterschleifzyklen liegen natürlich zeitlich beabstandet zueinander. Zwischen zwei Nachschleifvorgängen und/oder Hinterschleifvorgängen wird der Formfräskopf 1 üblicherweise zum Fräsen von zu bearbeitenden Werkstücken genutzt.

Der Vollständigkeit halber wird darauf hingewiesen, dass beim in Fig. 3 gezeigten Formfräskopf 1 die Fräsrichtung A abweichend zu den sonstigen Figuren liegt.

Aufgrund des logarithmischen Aussenprofils des Formfräskopfes 1 kann über die im Wesentlichen gesamte Lebensdauer (und damit bei unterschiedlichen Abnutzungsgraden des Formfräskopfes 1) ein Nachschleifvorgang bzw. Hinterschleifvorgang durchgeführt werden, wobei stets die gleiche Spitzschleifscheibe 8 verwendet werden kann. Typischerweise wird über die gesamte Lebensdauer des Formfräskopfes 1 hinweg die Anzahl der "ausschliesslichen Nachschleifvorgänge" (Materialabtrag im Bereich der Zahnbrust 7) grösser sein, als die Anzahl der "kombinierten Nachschleif- und Hinterschleifvorgänge" (sowohl an der Zahnbrust 7, als auch an der Oberfläche 4 der Fräszähne 2).

Natürlich sind die beschriebenen Nachschleif-und Hinterschleifschritte in ähnlicher Weise bei der Herstellung des Formfräskopfes 1 durchzuführen.

Damit beim fertigen Formfräskopf 1 eine möglichst hohe Bearbeitungsgeschwindigkeit (relative Vorschubgeschwindigkeit zwischen Formfräskopf 1 und Werkstück) realisiert werden kann, ist eine möglichst grosse Anzahl an Fräszähnen 2, bzw. in Umfangsrichtung des Formfräskopfes 1 gesehen ein möglichst geringer Abstand zwischen zwei zueinander benachbarten Fräszähnen 2 (geringe Zahnteilung) vorzusehen, weil in diesem Fall bei einer einzelnen Umdrehung des Formfräskopfes 1 eine grössere Anzahl an Materialabtragvorgängen auftritt (eine grössere Anzahl an Schneidkanten 6 läuft am zu bearbeitenden Werkstück vorbei).

Jedoch ist die Anzahl der Zähne in der Praxis auch nach oben hin (zumindest aus Praktikabilitätsgründen) limitiert (wenn auch meist ohne scharfe Grenze), da ansonsten die Abmessungen der Zahnlücken 3 so klein würden, dass der Abschleifvorgang im Bereich der Zahnbrust 7 der jeweiligen Fräszähne 2 mit einem zu filigranen Werkzeug (Spitzschleifscheibe 8) durchgeführt werden müsste (vergleiche Fig. 2). Auch würde die Anzahl der durchzuführenden Schleifschritte zu stark ansteigen, was entsprechend lang dauern würde.

Aus diesem Grunde ist es sinnvoll, einen möglichst vorteilhaften Kompromiss zu finden. Dieser ergibt sich, wenn die Zahnteilung des Formfräskopfes 1 (Abstand zweier benachbart zueinander liegender Fräszähne 2 entlang des Umfangs des Formfräskopfes 1) in Abhängigkeit vom Durchmesser des Formfräskopfes 1 im Wesentlichen der Beziehung *y=a.x⁵+b·x⁴ +c·x*³ *+d·x*² *+e.x+f* genügt und/oder die Zahnteilung des Formfräskopfes 1 kleiner als die derart ermittelte Zahnteilung gewählt wird. Dabei werden vorteilhafter Weise die Koeffizienten *b*, eund des Polynoms fünften Grades mit den Werten *a* = 2·10⁻⁹, *b =* -8·10⁻⁷, *c =*1·10⁻⁴, *d=*9,1·10⁻³*, e*=3,145·10⁻¹ und *f*=-2,062·10⁻¹ gewählt. Die Anzahl der Zähne des Formfräskopfes 1 ergibt sich (bei passend zueinander gewählten Einheiten) durch Division des Umfangs des Formfräskopfes 1 durch den Wert der Zahnteilung (Abstand zweier benachbart zueinander liegender Fräszähne 2). Es gilt also *N = U*/*A* mit *N* als der Anzahl an Fräszähnen 2, *U* als dem Umfang des Formfräskopfes 1 und *y* als der Zahnteilung, wobei sich bekanntermassen der Umfang aus dem Radius r (bzw. dem Durchmesser *d*) mittels der Beziehung *U =* 2 π *r* = π *d* berechnen lässt.

Für den Fall, dass sich bei vorgegebenem Durchmesser *d* des Fräskopfes 1 ein nicht-ganzzahliger Wert *N* an Fräszähnen 2 ergibt, ist es möglich, die Zahnzahl ("Grenzzahnzahl") aufzurunden, abzurunden bzw. kaufmännisch zu runden.

Vorteilhaft ist es jedoch, wenn man nach dem Runden der Zahnzahl des Formfräskopfs 1 die gerundete, ermittelte Anzahl an Zähnen 2 für den Formfräskopf 1 (nach deren Umrechnung auf die Zahnteilung *y* ) als Eingangsparameter in die genannte Formel einfliessen lässt und basierend auf der gerundeten Anzahl an Zähnen den optimalen Durchmesser des Formfräskopfes 1 errechnet (was insbesondere unter Verwendung von numerischen Lösungsverfahren problemlos möglich ist). Die Abweichungen im Durchmesser gegenüber dem "Wunschdurchmesser" liegen typischerweise im Bereich von wenigen Millimetern. Damit einhergehende nachteilige Effekte sind in aller Regel vernachlässigbar. Es ist im Übrigen darauf hinzuweisen, dass sich der Durchmesser eines Formfräskopfes 1 (oder eines sonstigen Fräskopfes) im Laufe seines Lebenszyklus infolge Abnutzung und/oder Nachschleifvorgängen und/oder Hinterschleifvorgängen ohnehin ändert und somit in jedem Fall eine gewisse Abweichung vom "Wunschdurchmesser" auftreten wird.

## Patentansprüche

1. Formfräskopf (1) mit einer Mehrzahl von spanend arbeitenden Fräszähnen (2) und dazwischen angeordneten Zahnlücken (3), welche entlang einer Umfangsfläche (5) des Formfräskopfes (1) angeordnet sind,
wobei die Anzahl der Fräszähne (2) grösser und/oder im Wesentlichen gleich der Anzahl an Fräszähnen (2) ist, die unter Verwendung der Beziehung *y=a*·*x*⁵*+b·x⁴ +c·x*³ *+d·x*² *+e*·*x+f* ermittelt wird, wobei *x* der Durchmesser des Formfräskopfes (1) in Millimetern und *y* die Zahnteilung, also der Abstand zweier benachbart zueinander liegender Fräszähne (2) in Millimetern, ist, und wobei im Wesentlichen gilt, dass
der Wert von *a* zwischen *a*=1,95·10⁻⁹ und *a*=2,05·10⁻⁹,
der Wert von *b* zwischen *b=*-7,5*·*10⁻⁷ und *b*=-8,5·10⁻⁷*,*
der Wert von *c* zwischen *c*=0,95·10⁻⁴ und *c*=1,05·10⁻⁴,
der Wert von *d* zwischen *d*=9,0·10⁻³ und *d*=9,2·10⁻³*,*
der Wert von *e* zwischen *e*=3,1·10⁻¹ und *e*=3,2·10⁻¹, und
der Wert von *f* zwischen *f=*2,0·10⁻¹ und *f=*-2,1·10⁻¹ liegt,
**dadurch gekennzeichnet dass**, der Formfräskopf eine profilkonstant bzw. logarithmisch hinterschliffene Oberfläche aufweist, wobei das Verhältnis von Fräszahnbreite zu Breite der dazwischenliegenden Zahnlücke im Bereich von 0,95 bis 1,05 liegt, und wobei die Höhe der Fräszähne im Bereich von 0,05 bis 10 mm liegt.

2. Formfräskopf (1) nach Anspruch 1, **dadurch gekennzeichnet, dass** ein Zahnbrustwinkel (*γ*) und/oder ein Freiwinkel (*α*) der Fräszähne (2) bei einem Nachschleifen und/oder Hinterschleifen der Fräszähne (2) im Wesentlichen konstant bleibt.

3. Formfräskopf (1) nach einem der vorangehenden Ansprüche,
**dadurch gekennzeichnet, dass** die Fräszähne (2) mit im Wesentlichen gleichen Abstand entlang des Umfangs (5) des Formfräskopfes (1) angeordnet sind.

4. Formfräskopf (1) nach einem der Ansprüche 1 oder 2, **dadurch gekennzeichnet, dass** die Fräszähne (2) mit zueinander variierendem Abstand entlang des Umfangs (5) des Formfräskopfes (1) angeordnet sind.

5. Formfräskopf (1) nach einem der Ansprüche 1 oder 2, **dadurch gekennzeichnet, dass** der Formfräskopf (1) aus Wolframcarbid und/oder Kobalt ist, wobei Diamant und/oder Bornitrid zur Erhöhung der Härte des Materials einsetzbar ist.

6. Formfräskopf (1) nach einem der Ansprüche 1 bis 5, **dadurch gekennzeichnet, dass** der Formfräskopf (1) derart ausgebildet, eingerichtet und dimensioniert ist, dass er mit einer Schleifscheibe mit bis zu 60 mm Durchmesser hinterschleifbar ist, wobei die Drehachse des Formfräskopfes (1) und die Drehachse der Schleifscheibe im Wesentlichen parallel zueinander ausgerichtet sind.

## Claims

1. Form cutter milling head (1) with a plurality of machining milling teeth (2) and tooth gaps (3) arranged there-between, which are arranged along a circumferential surface (5) of the form cutter milling head (1),
whereby the number of milling teeth (2) is greater than and/or substantially equal to the number of milling teeth (2) ascertained using the equation *y = a* · *x*⁵ *+ b* · *x*⁴*+ c* · *x*³ *+ d* · *x² + e* · *x + f*, wherein *x* is the diameter of the form cutter milling head (1) in millimeters and *y* is the tooth pitch, i.e. the distance between two milling teeth (2) situated adjacent to one another, in millimeters, and it substantially applies that
the value of *a* ranges between *a* = 1.95·10⁻⁹ and *a* = 2.05·10⁻⁹,
the value of *b* ranges between *b* = -7.5·10⁻⁷ and *b* = -8.5·10⁻⁷,
the value of *c* ranges between *c* = 0.95·10⁻⁴ and *c* = 1.05·10⁻⁴,
the value of *d* ranges between *d* = 9.0·10⁻³ and *d* = 9.2·10⁻³,
the value of *e* ranges between *e* = 3.1·10⁻¹ and *e* = 3.2·10⁻¹, and
the value of *f* ranges between *f =* -2.0·10⁻¹ and *f =* -2.1·10⁻¹,
**characterized in that** the form cutter milling head has a surface which is relief-ground in a profile-constant, or respectively logarithmical, way, whereby the ratio of milling tooth width to width of the tooth gap situated in between is in the range of 0.95 to 1.05 and whereby the height of the milling teeth is in the range of 0.05 to 10 mm.

2. Form cutter milling head (1) according to claim 1, **characterized in that** a tooth face angle (*γ*) and/or a clearance angle (*α*) of the milling teeth (2) remains substantially constant with a resharpening and/or relief grinding of the milling teeth (2).

3. Form cutter milling head (1) according to one of the preceding claims, **characterized in that** the milling teeth (2) are arranged with substantially the same spacing along the circumference (5) of the form cutter milling head (1).

4. Form cutter milling head (1) according to one of the claims 1 or 2, **characterized in that** the milling teeth (2) are disposed with a spacing varying with respect to one another along the circumference (5) of the form cutter milling head (1).

5. Form cutter milling head (1) according to one of the claims 1 or 2, **characterized in that** the form cutter milling head (1) is of tungsten carbide and/or cobalt, whereby diamond and/or boron nitride are usable to increase the hardness of the material.

6. Form cutter milling head (1) according to one of the claims 1 to 5, **characterized in that** the form cutter milling head (1) is designed, arranged and dimensioned in such a way that it is able to be relief ground using a grinding wheel of up to 60 mm in diameter, the rotational axis of the form cutter milling head (1) and the rotational axis of the grinding wheel being aligned substantially parallel to one another.

## Revendications

1. Tête de fraisage (1) formée avec une pluralité de dents de fraisage (2) agissant pour la découpe, et d'interstices (3) interdentaires, qui sont agencés le long d'une surface circonférentielle (5) de la tête de fraisage (1),
dans laquelle le nombre de dents de fraisage (2) est plus grand et/ou substantiellement égal au nombre de dents de fraisage (2) déterminé en utilisant l'équation *y = a* · *x³ + b* · *x*⁴ + *c* · *x³ + d* · *x² + e* · *x + f*, où *x* est le diamètre de la tête de fraisage (1) en millimètres et *y* est le pas de dent, c'est-à-dire la distance entre deux dents de fraisage (2) adjacentes, en millimètres, et les plages de valeurs suivantes s'appliquent substantiellement aux paramètres *a, b , c , d, e,* et *f :*
*a* se situe entre 1.95·10⁻⁹ et 2.05·10⁻⁹,
*b* se situe entre -7.5·10⁻⁷ et -8.5·10⁻⁷,
c se situe entre 0.95·10⁻⁴ et 1.05·10⁻⁴,
*d* se situe entre 9.0·10⁻³ et *d =* 9.2·10⁻³,
*e* se situe entre 3.1·10⁻¹ et 3.2·10⁻¹, et
*f* se situe entre -2.0·10⁻¹ et -2.1·10⁻¹,
**caractérisée en ce que** la tête de fraisage possède une forme de surface biseautée dont le profilé est constant ou respectivement logarithmique, le rapport entre la largeur des dents de fraisage et la largeur de l'espace interdentaire se situant dans une plage comprise entre 0,95 et 1,05, et la hauteur des dents de fraisage se situant dans une plage comprise entre 0,05 et 10 mm.

2. Tête de fraisage (1) selon la revendication 1, **caractérisée en ce qu'**un angle de coupe *γ* et/ou un angle de dégagement *α* de la dent de fraisage (2) reste substantiellement constant suite à un réaffutage et/ou suite au meulage des dents de fraisage (2).

3. Tête de fraisage (1) selon l'une des revendications précédentes, **caractérisée en ce que** les dents de fraisage (2) sont agencées substantiellement selon le même espacement le long de la circonférence (5) de la tête de fraisage (1).

4. Tête de fraisage (1) selon l'une des revendications 1 ou 2, **caractérisée en ce que** les dents de fraisage (2) sont disposées selon un espacement variable les unes par rapport aux autres le long de la circonférence (5) de la tête de fraisage (1).

5. Tête de fraisage (1) selon l'une des revendications 1 à 4, **caractérisée en ce que** la tête de fraisage (1) est composée de carbure de tungstène et/ou de cobalt, du diamant et/ou du nitrure de bore pouvant être utilisés pour augmenter la dureté du matériau.

6. Tête de fraisage (1) selon l'une des revendications 1 à 5, **caractérisée en ce que** la tête de fraisage (1) est conçue, agencée et dimensionnée de sorte qu'elle puisse être formée par meulage en utilisant une meule de plus de 60 mm de diamètre, l'axe de rotation de la tête de fraisage (1) et l'axe de rotation de la meule étant alignés de manière substantiellement parallèle l'un par rapport à l'autre.
